# EUROPEAN PATENT APPLICATION

(11) **EP 2 511 498 A2**
(43) Date of publication of application: **17.10.2012**
(21) Application number: 12160836.8
(22) Date of filing: 22.03.2012
(51) Int. Cl.: F02C 7/232

(54) **Fuel supply arrangement**

(30) Priority: 12.04.2011 GB 201106116
(71) Applicant: Rolls-Royce plc, London SW1E 6AT (GB)
(72) Inventor: Pidcock, Anthony, Derby, DE73 6PH (GB)
(74) Representative: Roberts, Nicholas John

(57) **Abstract**

A fuel supply arrangement for supplying fuel to a turbine engine, the arrangement having a fuel injector in fluidical connection with a first manifold via a first conduit and a second fuel manifold via a second conduit, wherein the first conduit is in fluidical connection with a valve having two outlets, the first outlet fluidically connecting the valve with at least one pilot vent in the injector, and the second outlet fluidically connecting the valve with at least one main vent in the injector via a second valve, the second conduit in fluidical connection with at least one further main vent in the injector via a third valve.

## Description

The present invention relates to fuel supply arrangements and in particular a fuel supply arrangement in a turbine engine.

Gas turbine engines have combustors in which fuel is burnt. Fuel is supplied to the combustor via fuel injectors and to the injectors using a fuel supply arrangement. Modern injectors may provide staged fuel flow in which the quantity of fuel is supplied to both a pilot set of nozzles that are used either at low power or throughout operation of the injector and a main set of nozzles that are typically used at higher engine power requirements.

Stagnant fuel in the fuel supply arrangement can be affected by the heat within the engine and may thermally decompose, or coke, leading to deposits forming within the fuel supply manifolds which may cause blockage of the nozzles, conduits or valves within the injectors and fuel supply arrangement.

The engine environment is harsh and can lead to mechanical problems from the components of the fuel supply arrangement and it is desirable to provide a simple system which is robust and provides a controllable fuel supply to the combustor.

It is an object of the invention to seek to provide an improved fuel supply arrangement.

According to a first aspect of the invention there is provided a fuel supply arrangement for supplying fuel to a turbine engine, the arrangement having a fuel injector in fluidical connection with a first manifold via a first conduit and a second fuel manifold via a second conduit, wherein the first conduit is in fluidical connection with a valve upstream of two fuel passages, the first fuel passage fluidically connecting the valve with at least one pilot vent in the injector, and the second fuel passage fluidically connecting the valve with at least one main vent in the injector via a second valve, the second conduit in fluidical connection with at least one of the pilot vents in the injector via a third valve.

The first and second manifolds may be in fluidical connection with a plurality of fuel injectors. Each injector may be of identical construction.

The valve may be upstream of more than two fuel passages.

Preferably the first valve is a pressure operated valve operable by the pressure of fuel in the first fuel manifold. The first valve may be a pressure operated check valve. Alternatively the first valve may be a weight distributor valve which compensates for manifold head effects.

The third valve may be a pressure operated valve operable by the pressure of fuel in the second fuel manifold. Alternatively the third valve may be a weight distributor valve which compensates for manifold head effects.

Preferably the fuel supply arrangement further comprises a fuel management unit for controlling the pressures in each of the first and second manifolds. Preferably the fuel management unit can control the fuel pressure in each manifold.

The at least one pilot vent may be a nozzle. Alternatively the pilot vent may comprise an aperture opening onto a prefilmer surface. The aperture may be an slot extending around an the prefilmer surface. The pilot aperture may be supplied from two fuel galleries. Each of the two fuel galleries may have a fuel swirler. The galleries may be located as a radially inner fuel gallery and a radially outer fuel gallery. The radially outer fuel gallery may be supplied with fuel from the second conduit. The radially inner fuel gallery may be supplied with fuel from the first fuel passage.

The at least one main vent may comprise apertures opening onto a prefilmer surface. Alternatively, the at least one main vent may be a nozzle.

According to a second aspect of the invention there is provided a method of supplying fuel to a turbine engine, via an arrangement having a fuel injector in fluidical connection with a first manifold via a first conduit and a second fuel manifold via a second conduit, the first conduit in fluidical connection with a valve having two outlets, the first outlet fluidically connecting the valve with at least one pilot vent in the injector, and the second outlet fluidically connecting the valve with at least one main vent in the injector via a second valve, the second conduit in fluidical connection with at least one pilot vent in the injector via a third valve, the method comprising the steps of independently controlling the pressure within the first and second manifolds to supply fuel to the at least one pilot vent and the at least one main vent.

The invention will now be described by way of example only with reference to the accompanying figures in which:
Figure 1 depicts a gas turbine engine having a fuel supply arrangement in accordance with the invention;
Figure 2 depicts the fuel supply arrangement in accordance with the invention;
Figures 3, 4 depict a distributor valve.
Figures 5a and 5b depict an arrangement for an airblast pilot in accordance with an alternative embodiment of the invention.

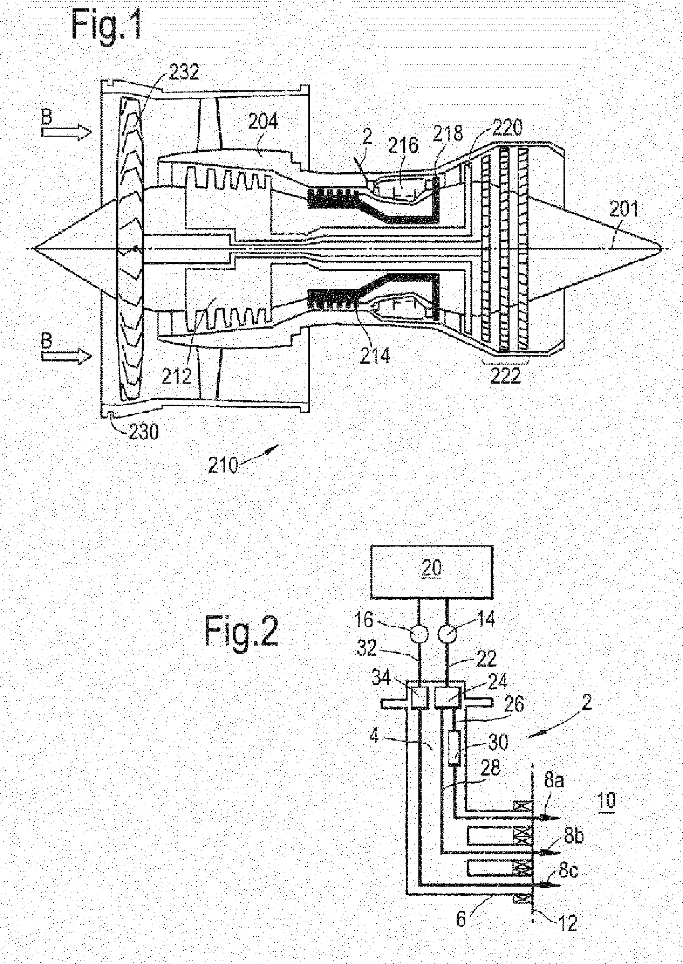

With reference to Figure 1, a ducted fan gas turbine engine generally indicated at 210 comprises, in axial flow series, an air intake 230, a propulsive fan 232, an intermediate pressure compressor 212, a high pressure compressor 214, combustion equipment 216, a high pressure turbine 218, an intermediate pressure turbine 220, a low pressure turbine 222 and an exhaust nozzle 201.

Air entering the air intake 230 is accelerated by the fan 232 to produce two air flows, a first air flow into the intermediate pressure compressor 212 and a second air flow that passes over the outer surface of the engine casing 204 and which provides propulsive thrust. The intermediate pressure compressor 212 compresses the air flow directed into it before delivering the air to the high pressure compressor 214 where further compression takes place.

Compressed air exhausted from the high pressure compressor 214 is directed into the combustion equipment 216, where it is mixed with fuel supplied from a fuel injector 2 and the mixture combusted. The resultant hot combustion products expand through and thereby drive the high 218, intermediate 220 and low pressure 222 turbines before being exhausted through the nozzle 201 to provide additional propulsive thrust. The high, intermediate and low pressure turbines respectively drive the high and intermediate pressure compressors and the fan by suitable interconnecting shafts.

Figure 2 depicts a fuel supply arrangement in accordance with the invention. The arrangement has an injector 2 having a stalk 4 and a head 6 which contains a plurality of vents 8a, 8b, 8c which supply fuel from the injector into a combustion volume 10 that is bounded by a combustor wall 12 (one of which, the combustor head, is shown). The injector is capable of providing a staged fuel flow depending on the power output required by the gas turbine.

The injector head provides radial staging with a central pilot zone and radially outer main zone arranged coaxially about the pilot. The vents 8b and 8c feeding the pilot zone may be pressure jet atomizers or airblast nozzles which have a prefilmer surface to which the vents feed fuel and over which a swirling airflow is passed. The fuel is pushed across the prefilmer surface by the swirling air to a lip from which the fuel is shed and is atomised by the swirling air.

The vents 8a feeding the mains zone may be pressure jet atomizers or airblast nozzles which have a prefilmer surface to which the vents feed fuel and over which a swirling airflow is passed. The fuel is pushed across the prefilmer surface by the swirling air to a lip from which the fuel is shed and is atomised by the swirling air.

Fuel is supplied to the injector 2 from two fuel manifolds 14, 16. The manifold 14 delivers fuel from the fuel management unit 20 to the vents 8a and 8b. The circuit to supply the fuel has a conduit 22 leading from the manifold 14 to a valve 24 which has two outlets 26, 28 or a single outlet which divides downstream of the valve. The outlet 28 supplies fuel to the pilot vents 8b; the outlet 26 supplies fuel to the main vents 8a.

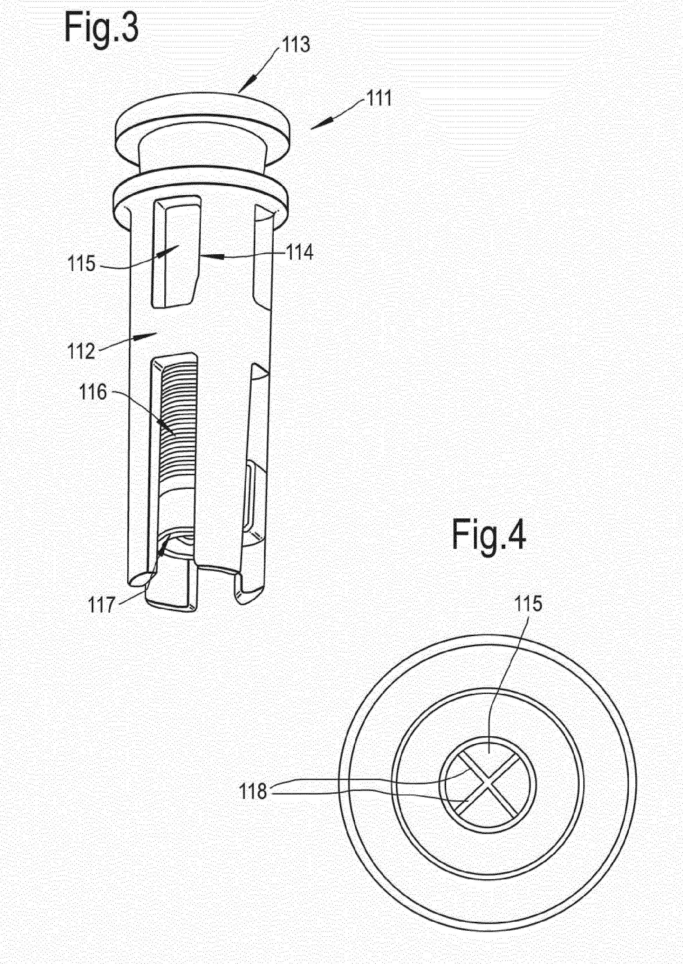

One valve of particular use in the arrangement is known as a weight type distributor valve and is shown in Figure 3 and 4. The distributor valve 111 comprises a hollow cylindrical housing 112 having a fuel inlet port 113 provided at one end, and at least one fuel outlet port 114 provided through its sidewall. An annular valve seat is provided around the inlet port 113. A. valve member in the form of a cylindrical weight 115 is provided within the housing, the weight being arranged for sliding movement along the axis of the housing. The weight is urged towards a closed position in which it substantially seals against the valve seat under the action of a biasing spring 116. The spring usually takes the form of a helically wound compression spring provided between the valve weight 115 and an adjusting nut 117 threadedly engaged within the end of the housing. The adjusting nut may be rotated relative to the housing in order to adjust the biasing force provided by the spring.

When fuel is supplied to the inlet port 113 with sufficient pressure, the valve weight 115 is moved out of engagement with the valve seat, against the biasing force of the spring 116, thereby allowing the fuel to flow past the valve weight and through the outlet port 114. The valve closes when the fuel pressure drops below a predetermined level.

Weight type distributor valves are more complex than simple pressure operated check valves but are preferred as the weight or biasing force may be varied depending on the relative position of the valve to the manifold which changes in accordance with the circumferential position of the injector around the combustor. The distributor valve can be set to compensate for pressure head effects which could affect flow characteristics.

The pressure at which the biasing force of the spring is overcome is set relatively low so that when the engine is running fuel is supplied to the vents 8b through conduit 28 at all times. Beneficially this means that there is a continual flow of fuel through the manifold 14 and conduit 22 which prevents temperature rise of the fuel in the manifold which can occur if the fuel is stagnant.

Fuel is prevented from flowing through conduit 26 by a valve 30. The valve is a pressure operated check valve which opens when the pressure in conduit 26 exceeds a given threshold.

The second manifold 16 delivers fuel from the fuel management unit to the injector via conduit 32. A weight type distributor valve 34 is provided to control the flow to the vents 8c.

The fuel pressure in the second manifold 16 can be set independently of the fuel pressure in the first manifold 14 and the pressure required to open the distributor valve 34 may be different to that required to open valve 24 or valve 30.

In operation the fuel management unit supplies fuel and controls the fuel pressure in each of the manifolds 16, 14. Typically the pressure in manifold 16 is less than the pressure in manifold 14. At very low power requirements from the engine a fuel supply is passed from manifold 14 through valve 24 and conduit 28 to the pilot vents 8b. If the fuel management unit 20, through a system of logic gates, determines that there is no danger of any problem caused by heat soakage into the manifold 16 then the pressure in the manifold 16 may be set low enough not to open valve 34. In this circumstance no fuel flows to the pilot vents 8c. Once the fuel management unit determines there is a risk of problems caused by heat soakage the pressure in the manifold 16 is raised to open the valve 34 to permit a continuous flow of fuel to the vents 8c to continuously flow fuel within the manifold 16.

As more engine power is required the engine fuel management unit schedules appropriate proportions of fuel to the first and second manifolds. The distributor valves 24 and 34 open or remain open to supply a continuously controllable fuel supply to vents 8b and 8c with the flow to each being separately adjusted due to a controlled fuel pressure in the manifolds.

As the power requirements increase the fuel management unit further selectively increases the fuel flow in the manifolds 14, 16 which raises the pressure in the pipework. At a set fuel pressure the valve 30 opens to supply fuel to the main vents 8a through conduit 26. Because the characteristics of valve 30 are known there is a unique and predictable distribution of the fuel proportions that result between conduits 28 and 26. An algorithm is built into the fuel management unit software that is able to predict the distribution of fuel supplied to the manifold 14 and then supply the appropriate quantity of fuel to the second manifold 16 so that both the total quantity of fuel is correct and the distribution of fuel between vents 8a, 8b and 8c is also correct to achieve optimum combustor performance.

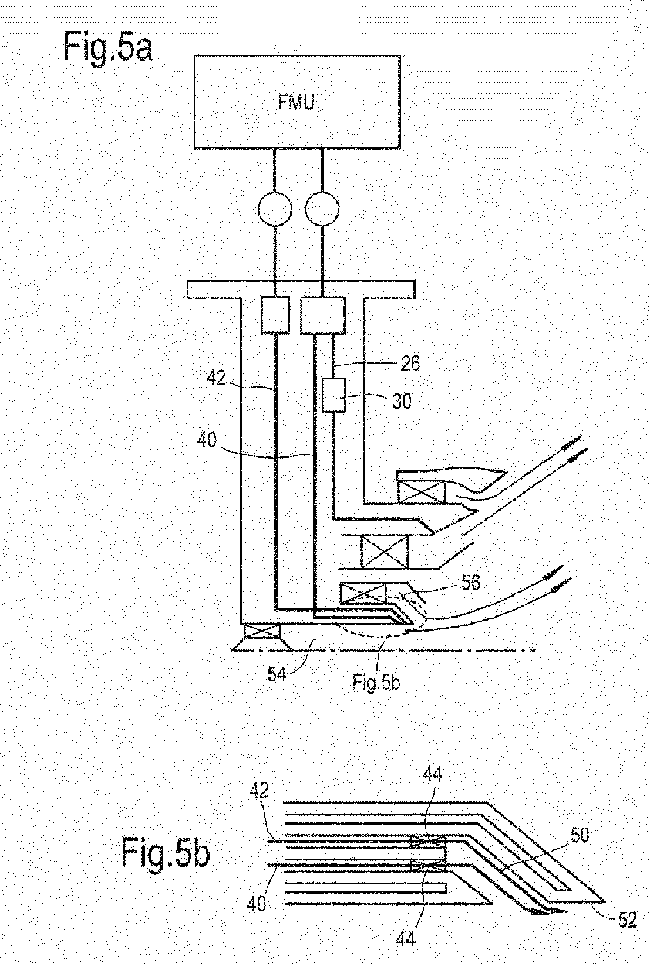

In a preferred embodiment which is shown in Figure 5, the pilot vent comprises a single annular slot 50 or vent which is fed from two galleries 40, 42. Each of the galleries has a swirler 44 which imparts swirl to the fuel to encourage it to flow towards the radially outer surface of the slot 50. The fuel exits the slot and flows across the prefilmer surface where it is atomised by a shearing flow of air which passes along bore 54 as it interacts with a shearing flow of air passing along bore 56.

To optimise the flow from the pilot vent 50 the galleries are carefully arranged to ensure that the flow from the second conduit feeds into the slot from a more radially outer position than the flow from the first fuel passage. This is important since the second conduit provides the majority of the pilot fuel for the period the injector is operating without use of the mains. By radially staging this flow outside the flow from the first fuel passage disruption to the flow is minimised which leads to a relatively smooth and stable flow over the prefilmer surface. A smooth flow is desirable to minimise variations which can be a source of combustor noise.

At low powers fuel can be supplied through both the radially inner and radially outer galleries 40, 42 which maintains a flow in both first fuel manifold and the second fuel manifold. The flow through the inner gallery is relatively stable as the power is increased whilst the flow through the outer gallery is raised. At a given power requirement the flow through the inner gallery is increased whilst the flow through the outer gallery may be decreased to provide a stable or gradually increasing flow through the slot. At a further power requirement the pressure in the manifold 14 is raised to open valve 30 which supplies fuel to the main vents. Further adjustment may be made to vary the flow of fuel through the outer gallery. When a decrease in power is required the reverse cycle may be followed.

It will be appreciated that the fuel supply arrangement offers a number of distinct advantages. The fuel management can control the pressure in each of the manifolds 14, 16 independently with the known opening pressures of the valves allows continuously controllable fuel flows to three separate sets of vents in a fuel injector. Further, at all power requirements the arrangement can be set to ensure that fuel flows in both the first and second manifolds 14, 16 at all times which reduces the risk of thermal damage to the fuel and / or coking of the fuel in the manifolds. Further, the continuously controllable fuel flow avoids rapid changes in the volume of fuel supplied to the vents which can produce problems of combustion noise. Further, the elegant arrangement permits simpler valves to be employed providing reduced cost and risk in service.

It will be appreciated that where possible features from embodiments may be combined or interchanged.

## Claims

1. A fuel supply arrangement for supplying fuel to a turbine engine,
the arrangement having a fuel injector (2) in fluidical connection with a first manifold (14) via a first conduit (22) and a second fuel manifold (16) via a second conduit (32); **characterised in that**
the first conduit is in fluidical connection with a first valve (24) upstream of two fuel passages (26, 28), the first fuel passage fluidically connecting the valve with at least one pilot vent (8b) in the injector, and the second fuel passage fluidically connecting the valve with at least one main vent (8a) in the injector via a second valve (30),
the second conduit in fluidical connection with at least one of the pilot vents (8a) in the injector via a third valve (34).

2. A fuel supply arrangement according to claim 1, wherein the first valve (24) is a pressure operated valve operable by the pressure of fuel in the first fuel manifold.

3. A fuel supply arrangement according to claim 1 or claim 2, wherein the third valve (34) is a pressure operated valve operable by the pressure of fuel in the second fuel manifold (16).

4. A fuel supply arrangement according to any preceding claim, wherein the second valve is a pressure operated valve operable by the pressure of fuel in the first fuel manifold.

5. A fuel supply arrangement according to any preceding claim, further comprising a fuel management unit for controlling the pressures in each of the first and second manifolds.

6. A fuel supply arrangement according to any preceding claim, wherein the at least one pilot vent is a nozzle.

7. A fuel supply arrangement according to any one of claims 1 to 6, wherein the at least one pilot vent is an aperture (50) opening onto a prefilmer surface.

8. A fuel supply arrangement according to claim 7, wherein the aperture is an annular slot (50) extending around the prefilmer surface (52).

9. A fuel supply arrangement according to claim 7 or claim 8, wherein the pilot aperture is supplied from two fuel galleries (40, 42).

10. A fuel supply arrangement according to claim 9, wherein each of the two fuel galleries has a fuel swirler (44).

11. A fuel supply arrangement according to claim 9 or claim 10, wherein the galleries are located as a radially inner fuel gallery and a radially outer fuel gallery.

12. A fuel supply arrangement according to claim 11, wherein the radially outer fuel gallery is supplied with fuel from the second conduit.

13. A fuel supply arrangement according to any of claim 9 to claim 12, werein the radially inner fuel gallery may be supplied with fuel from the first fuel passage.

14. A fuel supply arrangement according to any preceding claim, wherein the at least one main vent comprises apertures opening onto a prefilmer surface.

15. A method of supplying fuel to a turbine engine, via an arrangement having a fuel injector in fluidical connection with a first manifold (14) via a first conduit (22) and a second fuel manifold (16) via a second conduit (32), the first conduit in fluidical connection with a valve (24) having two outlets (26, 28), the first outlet fluidically connecting the valve with at least one pilot vent (8b) in the injector, and the second outlet fluidically connecting the valve with at least one main vent (8a) in the injector via a second valve (30), the second conduit (32) in fluidical connection with at least one further main vent (8a) in the injector via a third valve (34), the method comprising the steps of independently controlling the pressure within the first and second manifolds to supply fuel to the at least one pilot vent, the at least one main vent and the at least one further main vent.
